# EUROPÄISCHE PATENTSCHRIFT

(11) **EP 2 519 743 B1**
(45) Veröffentlichungstag und Bekanntmachung des Hinweises auf die Patenterteilung: **09.10.2013**
(21) Anmeldenummer: 10781456.8
(22) Anmeldetag: 03.11.2010
(51) Int. Cl.: F04B 1/04, F04B 39/00, F04B 53/12, B60T 8/40

(54) **KOLBENPUMPE MIT EINEM EINLASSVENTIL**
PISTON PUMP HAVING AN INLET VALVE
POMPE À PISTON DOTÉE D'UNE SOUPAPE D'ADMISSION

(30) Priorität: 28.12.2009 DE 102009055330
(43) Veröffentlichungstag der Anmeldung: 07.11.2012
(73) Patentinhaber: Robert Bosch GmbH, 70442 Stuttgart (DE)
(72) Erfinder: JAHN, Heiko, 71732 Tamm (DE); ZIMMERMANN, Marc, 71720 Oberstenfeld (DE); JURETKO, Martin, Hildesheim 31134 (DE)
(86) Internationale Anmeldenummer: PCT/EP2010/066723
(87) Internationale Veröffentlichungsnummer: WO 2011/079983

(56) Entgegenhaltungen:
- WO-A2-98/08034
- DE-A1-102005 017 131
- DE-A1-102006 025 027
- DE-A1-102006 054 061

## Beschreibung

### Stand der Technik

Die Erfindung betrifft eine Kolbenpumpe mit einem Kolben, einem am Kolben radial gegen einen Zylinder abdichtenden Dichtelement und einem am Kolben angeordneten Einlassventil, das mit einem einen Schließkörper halternden Ventilkäfig gestaltet ist. Darüber hinaus betrifft die Erfindung eine Fahrzeugbremsanlage mit einer derartigen Kolbenpumpe.

Bei bekannten Fahrzeugbremsanlagen ist das so genannte Hydroaggregat ein fester Bestandteil. Es dient zum Dosieren des Bremsdrucks und weist dazu eine Pumpe auf, die in der Regel eine Kolbenpumpe ist, bei der ein Kolben in einem Zylinder verschiebbar ist. Das Verschieben des Kolbens erfolgt in einem ZweiTakt. Dabei wird in einem ersten Takt ein zu förderndes Fluid, beispielsweise Bremsflüssigkeit, durch ein Einlassventil angesaugt. In einem zweiten Takt wird das Fluid durch ein Auslassventil ausgestoßen. Der Kolben ist gegen die innere Mantelfläche des Zylinders mittels eines Dichtelements abgedichtet und dabei von diesem Dichtelement auch in dem Zylinder während seiner Hubbewegung geführt. Eine derartige Kolbenpumpe ist beispielsweise aus der DE 10 2006 054 061 A1, die als nächstliegender Stand der Technik angesehen wird, bekannt. Bei dieser Kolbenpumpe besteht ein axialer Versatz zwischen der Federauflage am Dichtelement für eine Rückstellfeder des Kolbens und dem Ende einer zugehörigen Dichtlippe. Allerdings steht die Dichtlippe gegenüber der Federauflage vor, so dass bei einer Montage der Rückstellfeder des Kolbens die Dichtlippe beschädigt werden kann.

Der Erfindung liegt die Aufgabe zugrunde, eine Kolbenpumpe bzw. Fahrzeugbremsanlage mit einer Kolbenpumpe vorzuschlagen, bei der eine Beschädigung der Dichtlippe aufgrund der anliegenden Rückstellfeder des Kolbens vermieden wird.

### Offenbarung der Erfindung

Bei einer Kolbenpumpe mit einem Kolben, einem den Kolben radial gegen einen Zylinder abdichtenden Dichtelement und einem am Kolben angeordneten Einlassventil, das mit einem einen Schließkörper halternden Ventilkäfig gestaltet ist, wobei das Dichtelement und der Ventilkäfig einstückig gestaltet sind und an dem Dichtelement eine Federauflage für eine den Kolben gegenüber dem Zylinder abstützende Rückstellfeder ausbildet ist und eine gegen den Zylinder anliegende Dichtlippe aufweist, endet erfindungsgemäß diese Dichtlippe relativ zur Federauflage an der von der Rückstellfeder abgewandten Seite axial zurückversetzt.

Die im Vergleich zur Angriffsfläche der Rückstellfeder axial zurückgesetzte Dichtlippe verhindert, dass die Dichtlippe aufgrund der anliegenden Rückstellfeder und deren Rückstellkräfte beschädigt werden könnte.

Gemäß einer ersten vorteilhaften Weiterbildung der erfindungsgemäßen Kolbenpumpe sind das Dichtelement und der Ventilkäfig aus Kunststoff hergestellt.

Durch gezielte Auswahl eines sowohl für den Ventilkäfig ausreichend formfesten als auch für das Dichtelement ausreichen elastischen Kunststoffs ist es möglich, das einstückige Bauteil in nur einem Fertigungsprozess herzustellen.

Gemäß einer zweiten vorteilhaften Weiterbildung der erfindungsgemäßen Kolbenpumpe ist das Dichtelement mit einer Axialnut gestaltet, welche zum Hochdruckbereich der Kolben-Zylinder-Anordnung offen ist.

In die derart zum Hochdruckbereich der Kolben-Zylinder-Anordnung offene Axialnut kann im Betrieb der Kolbenpumpe der im Hochdruckbereich vorherrschende Druck in die Axialnut hineindrängen und dadurch diese aufweiten. Zugleich wird dann der radial äußere Teil des Dichtelements, also jener Teil, der radial außen neben der Axialnut liegt, an die benachbarte Innenwand des Zylinders gedrängt. So entwickelt sich mit steigendem Druck im Hochdruckbereich auch eine Verstärkung der Anlehnung des Dichtelements an den Zylinder und damit eine bessere Abdichtung. Zugleich verbessert sich das Leckageverhalten am Kolben und ferner auch die Führung des Kolbens im Zylinder.

Gemäß einer dritten vorteilhaften Weiterbildung der erfindungsgemäßen Kolbenpumpe ist das Dichtelement an seiner dem Kolben zugewandten Seite gestuft gestaltet.

Die gestufte Gestalt des Dichtelements führt zu einer verhältnismäßig großen Kontaktfläche zwischen dem Kolben und dem Dichtelement. Diese große Kontaktfläche verbessert die Befestigungssituation des Dichtelements. Dieses kann insbesondere durch Aufpressen an den axial verlaufenden Flanken der Stufe(n) festgelegt werden. Zugleich ergibt sich an diesen Flanken eine Zentrierung des Dichtelement relativ zum Kolben. Die radial gerichteten Flanken der Stufe(n) dienen zum Abstützen des Dichtelements gegenüber dem Kolben, was insbesondere beim Rückstellen des Kolbens mittels der oben genannten Rückstellfeder von Vorteil ist.

Gemäß einer vierten vorteilhaften Weiterbildung der erfindungsgemäßen Kolbenpumpe ist das Dichtelement den Kolben umgreifend gestaltet.

Der derartige Umgriff des Dichtelements um einen Abschnitt des Kolbens ist insbesondere an einer Stufe, einer Nut oder einer Phase des Kolbens derart gestaltet, dass das Dichtelement am Kolben in axialer Richtung mittels einer umfänglich abschnittsweisen oder umlaufenden Raste hinterhakt. Dadurch ist eine formschlüssige Verbindung zwischen Kolben und Dichtelement geschaffen, die wegen der oben erwähnten, leicht elastischen Eigenschaft des Materials des Dichtelements auch in einer automatischen Fertigung gut hergestellt bzw. vormontiert werden kann.

Gemäß einer fünften vorteilhaften Weiterbildung der erfindungsgemäßen Kolbenpumpe ist der Kolben zweiteilig mit einem ersten, zu einem Antrieb gewandten Teil und einem zweiten, zum Dichtelement gewandten Teil gestaltet.

Den einzelnen Teilen des derart zweiteilig gestalteten Kolbens können besondere Funktionen zugewiesen werden. So dient der erste Teil zum Übertragen des am Antrieb erzeugten Schubes auf den zweiten Teil , der seinerseits das Einströmen von Fluid, insbesondere Bremsfluid, in das Einlassventil gewährleistet. Der Hochdruckbereich im Inneren des Zylinders ist dann mittels des Dichtelements abgegrenzt und gegenüber dem Niederdruckbereich abgedichtet. Dabei schiebt der zweite Teil das Dichtelement in den Zylinder hinein und wird seinerseits vom ersten Teil geschoben. Das Rückstellen erfolgt von der Rückstellfeder ausgehend durch Übertragen der Rückstellkräfte über das Dichtelement und den zweiten Teil auf den ersten Teil. Die einzelnen Teile können dabei im Hinblick auf die Materialwahl und mögliche Herstellungsverfahren einfacher optimiert werden, als dies bei einem einteiligen Kolben der Fall wäre.

Gemäß einer sechsten vorteilhaften Weiterbildung der erfindungsgemäßen Kolbenpumpe ist das erste Teil als Vollzylinder und das zweite Teil als Hohlzylinder gestaltet.

Das als Vollzylinder gestaltete erste Teil kann sehr kostengünstig hergestellt werden und dabei insbesondere hohe Schubkräfte übertragen. Es ist vorteilhaft aus Kunststoff hergestellt, dem bevorzugt verstärkende Fasern zugesetzt sind. Das als Hohlzylinder gestaltete zweite Teil kann vorteilhaft bereits als Rohteil mit eine zylindrischen Hohlraum gestaltet sein. Dabei ist das zweite Teil bevorzugt aus Metall hergestellt und insbesondere als ein Sintergussteil oder ein Tiefziehteil gestaltet. In ein derartiges Teil ist lediglich mindestens eine radiale Öffnung auszubilden, durch die dann im Betrieb der Kolbenpumpe das einzusaugende Fluid von radial außen nach innen in Richtung auf das Einlassventil strömen kann.

Die oben genannte Aufgabe ist ferner auch mit einer Fahrzeugbremsanlage mit einer derartigen erfindungsgemäßen Kolbenpumpe gelöst, wobei entsprechende Vorteile erzielt werden, wie sie oben bereits für die Kolbenpumpe selbst genannt worden sind.

Nachfolgend wird ein Ausführungsbeispiel der erfindungsgemäßen Lösung anhand der beigefügten schematischen Zeichnungen näher erläutert. Es zeigt:
- Fig.1: einen Längsschnitt einer Kolbenpumpe gemäß dem Stand der Technik,
- Fig.2: das Detail II in Fig.1 in vergrößertem Maßstab,
- Fig.3: einen Längsschnitt einer ebenfalls aus dem Stand der Technik bekannten zweiten Kolbenpumpe,
- Fig.4: das Detail IV in Fig.3 in vergrößertem Maßstab,
- Fig.5: einen Längsschnitt eines Ausführungsbeispiels einer Kolbenpumpe gemäß der Erfindung und
- Fig.6: das Detail VI in Fig.5 in vergrößertem Maßstab.

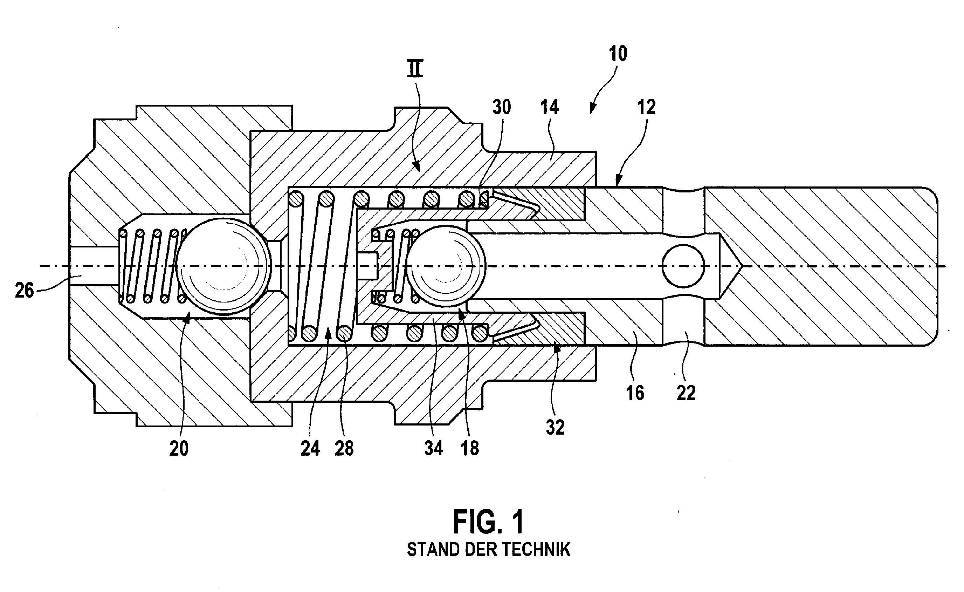

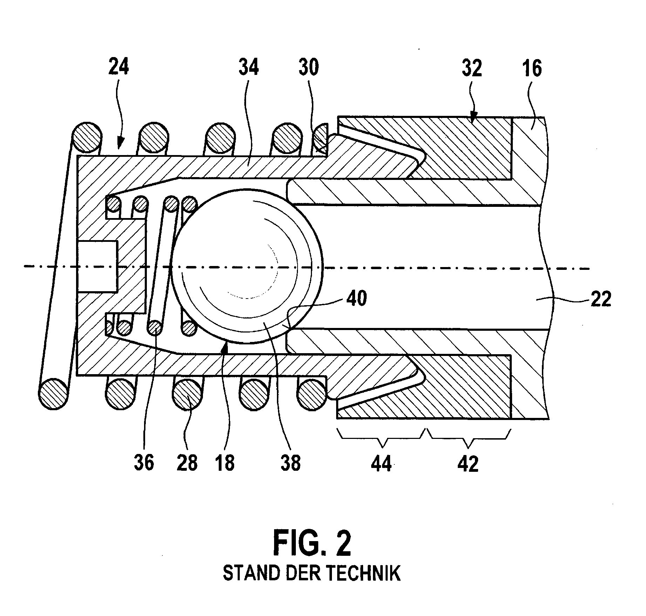

In den Fig.1 und 2 ist eine Kolbenpumpe 10 gemäß dem Stand der Technik veranschaulicht, die unter anderem eine Kolbenanordnung 12 umfasst, welche aus einem Zylinder 14 und einem darin verschiebbar gelagerten Kolben 16 gebildet ist. Die Kolbenanordnung 12 umfasst ferner ein Einlassventil 18 und ein Auslassventil 20. Diese Ventile 18 und 20 sind dafür vorgesehen, dass der Kolben 16 bei seiner Hubbewegung im Zylinder 14 ein Fluid durch einen Einlass 22 in einen Hochdruckraum bzw. Hochdruckbereich 24 im Inneren des Zylinders 14 einsaugen und dieses Fluid durch einen Auslass 26 unter Druck wieder aus dem Hochdruckbereich 24 herausfördern kann. Das Fluid ist vorliegend eine Bremsflüssigkeit.

Der Kolben 16 ist dabei in Axialrichtung mittels einer sich im Hochdruckbereich 24 befindenden Rückstellfeder 28 federnd vorgespannt. Die Rückstellfeder 28 ist bezogen auf Fig.1 an ihrem linken Ende an der Stirnfläche des Zylinders 14 abgestützt und drängt an ihrem rechten Ende gegen eine Federauflage 30. Die Federauflage 30 ist mit dem Kolben 16 ortsfest gekoppelt, so dass die Rückstellfeder 28 entsprechend über die Federauflage 30 gegen den Kolben 16 drängt.

Zwischen dem Kolben 16 und dem Zylinder 14 ist ferner ein Dichtelement 32 angeordnet, mit dem der Hochdruckbereich 24 im Zylinder 14 abgedichtet ist. Das Dichtelement 32 ist ringförmig gestaltet und umschließt den Kolben 16 an dessen äußerer Mantelfläche. An dieser Mantelfläche ist das Dichtelement 32 mittels eines auf den Kolben 16 aufgeschobenen Ventilkäfigs bzw. Ventilgehäuses 34 des Einlassventils 18 ortsfest gehalten. An dem Ventilgehäuse 34 ist auch die Federauflage 30 in Form eines Absatzes ausgeformt. Das derart gehalterte Dichtelement 32 legt sich radial innen gegen die innere Mantelfläche des Zylinders 14 an, um dort entlang zu gleiten und dabei abzudichten.

Das Ventilgehäuse 34 ist becherförmig als ein Käfig gestaltet, in dessen Inneren sich eine schraubenförmige Rückstellfeder 36 befindet, welche gegen einen kugelförmigen Schließkörper 38 drängt. Der Schließkörper 38 liegt dadurch (im in Fig.1 und 2 dargestellten Betriebszustand) an einem Ventilsitz 40 an, der an der Stirnseite des Kolbens 16 ausgebildet ist. Der Schließkörper 38 wird von diesem Ventilsitz 40 gegen die Kraft der Rückstellfeder 36 abgehoben, wenn der Kolben 16 bezogen auf Fig.1 nach rechts aus dem Zylinder 14 herausgezogen wird. Bei dieser Bewegung wird also das Einlassventil 18 geöffnet und Fluid wird in den Hochdruckbereich 24 eingesaugt.

Das Dichtelement 32 gemäß den Fig.1 und 2 weist einen im Wesentlichen im Querschnitt rechteckigen Grundkörper 42 auf, an dem eine zum Hochdruckbereich 24 hingewandte Dichtlippe 44 ausgebildet ist.

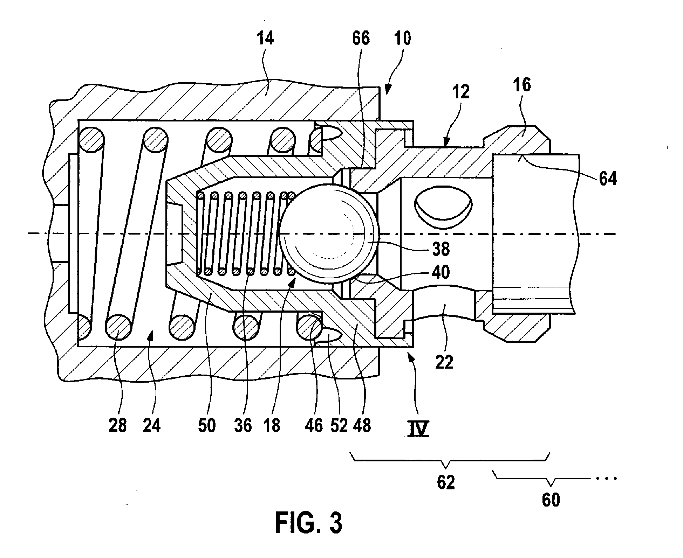

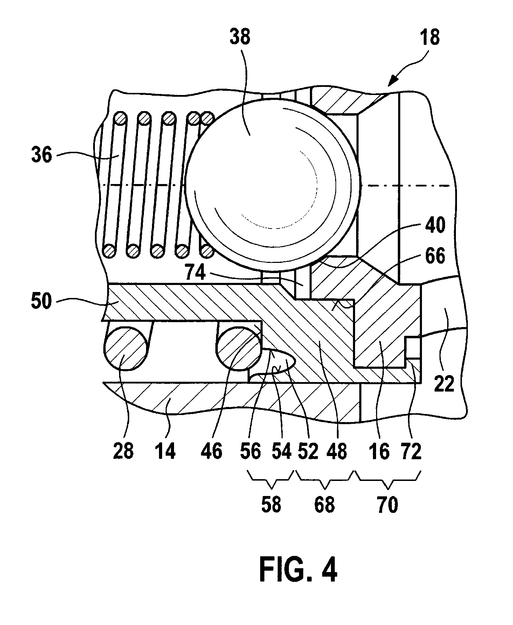

Die Fig. 3 und 4 zeigen zur weiteren Erläuterung der Erfindung eine zweite aus dem Stand der Technik bereits bekannte Kolbenpumpe 10. Diese weist ebenfalls eine Kolbenanordnung 12 mit einem Zylinder 14 und einem darin verschiebbaren Kolben 16 auf. Ferner sind ebenfalls ein Einlassventil 18 und ein Auslassventil 20 vorgesehen. Der Kolben 16 ist mit einer sich in einem Hochdruckbereich 24 befindenden Rückstellfeder 28 federnd vorgespannt, welche gegen eine mit dem Kolben 16 ortsfest gekoppelte, Federauflage 46 drängt.

Ferner befindet sich zwischen dem Kolben 16 und dem Zylinder 14 ein Dichtelement 48, welches an dem Kolben 16 ortsfest gehaltert ist und an der inneren Mantelfläche des Zylinders 14 entlang gleiten kann. Dieses Dichtelement 48 ist mit einem Ventilgehäuse 50 derart einstückig ausgeformt, dass auch die Federauflage 46 und das Dichtelement 48 einstückig gestaltet sind. Die einstückige Gestalt von Federauflage 46 und Dichtelement 48 ermöglicht eine axial sehr kurze, kompaktere Bauweise mit einem geringeren Schadraumvolumen. Mit der Rückstellfeder 28 kann das Dichtelement 48 zusätzlich vorgespannt werden. Ferner steht für die Rückstellfeder 28 an der Federauflage 46 eine radial sehr breite Auflagefläche zur Verfügung.

Das Dichtelement 48 ist, wie in Fig.4 erkennbar, mit einer Axialnut 52 gestaltet, die in Richtung des Hochdruckbereichs 24 offen ist. Entsprechend gelangt das im Hochdruckbereich 24 sich befindende und unter Druck stehende Fluid auch in diese Axialnut 52. Die Axialnut 52 wird von diesem Fluid an ihren beiden inneren, einander gegenüberliegenden Seitenflächen bzw. Flanken 54 und 56 radial auseinandergedrängt. Insbesondere wird der radial außen vor der Axialnut 52 sich befindende, lippenförmige Teil bzw. Abschnitt 58 des Dichtelements 48, der auch als Dichtlippe bezeichnet werden kann, radial nach außen und damit gegen die innere Mantelfläche des Zylinders 14 gedrängt. Dadurch lehnt sich bei steigendem Druck im Hochdruckbereich 24 auch dieser Abschnitt 58 des Dichtelements 48 stärker an den Zylinder 14 an und dichtet dort besser ab. Außerdem verbessert sich die Führung des Kolbens 16 im Zylinder 14.

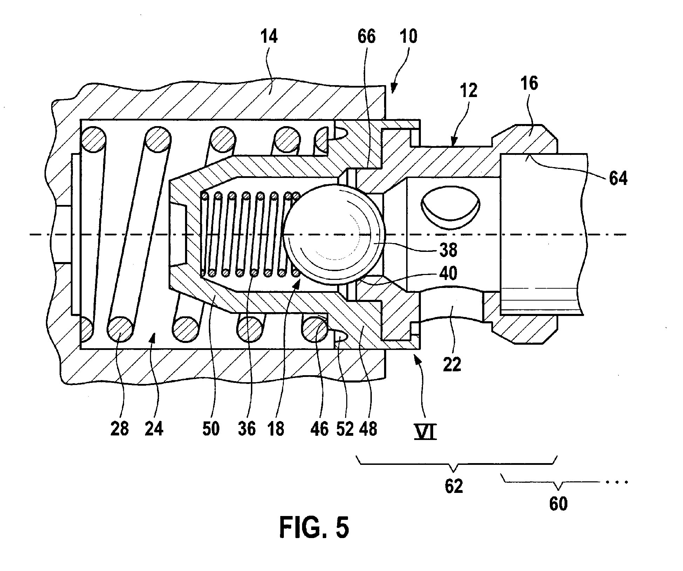

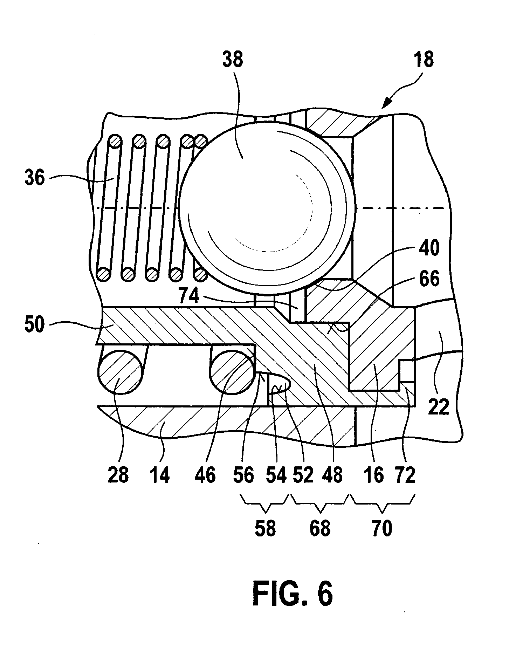

Die Fig. 5 und 6 veranschaulichen ein Ausführungsbeispiel eines Dichtelements 48, bei dem der lippenförmige Abschnitt 58 bzw. die Dichtlippe des Dichtelements 48 an ihrem Ende erfindungsgemäß relativ zur radial gerichteten Ebene der Federauflage 46 zu der von der Rückstellfeder 28 abgewandten Seite hin axial zurückgesetzt ist. Es ist damit von der Rückstellfeder 28 auch axial ein Abstand hergestellt, so dass die Rückstellfeder 28 den lippenförmigen Abschnitt 58 nicht beschädigen kann. Die Rückstellfeder 28 drängt aber weiterhin den Kern des Dichtelements 48 axial zusammen, so dass dieser radial nach außen gedrängt wird.

Der Kolben 16 ist bei beiden, in den Fig. 3 bis 6 gezeigten Ausführungsbeispielen zweiteilig aus einem ersten Teil 60 und einem zweiten Teil 62 gebildet. Das erste Teil 60 ist ein vollzylindrisches , stabförmiges Gebilde, das aus Kunststoff spritzgegossen und speziell dazu angepasst ist, dass es axial gerichtete Schubkräfte von einem (nicht dargestellten) Exzenterantrieb auf das zweite Teil 62 und damit auf das Dichtelement 48 übertragen kann. Das zweite Teil 62 ist ein hohlzylindrisches Sintergussteil, das an seinen beiden Enden jeweils einen Absatz bzw. eine Stufe 64 bzw. 66 aufweist. Die Stufe 64 umfasst das erste Teil 60 an dessen Endbereich radial außen, wobei das erste Teil 60 mittels einer Presspassung im Inneren der Stufe 64 kraftschlüssig festgelegt ist. Die Stufe 66 befindet sich benachbart vom Dichtelement 48 und wird von diesem radial außen in axialer Richtung umgriffen. Dabei liegt ein Abschnitt 68 des Dichtelements 48, welcher dessen Kern bildet, radial außen an der Stufe 66 an und bildet mit dieser eine Presspassung. Ein weiterer Abschnitt 70 des Dichtelements 48, der sich radial ganz außen befindet, umgreift als eine Art Arm bzw. Hülse die Stufe 66 des zweiten Teils 62 vollständig. An diesem Abschnitt 70 sind umfänglich mehrere Rasten 72 ausgebildet, die hinter dem radial äußeren Bereich der Stufe 66 hinterhaken und auf diese Weise eine in axialer Richtung formschlüssige Verbindung mit dem zweiten Teil 62 erzeugen.

Ferner ist im Grenzbereich zwischen dem Dichtelement 48 sowie dem einteilig damit ausgebildeten Ventilkäfig bzw. Ventilgehäuse 34 ein in radialer Richtung aufgeweiteter Ringraum 74 geschaffen. Dieser Ringraum 74 ermöglicht ein kurzfristiges Abströmen von Fluid, welches beim Öffnen des Einlassventils 18 als erstes durch den dann gebildeten Spalt zwischen dem Ventilsitz 40 und dem Schließkörper 38 durchtritt. Der Ringraum 74 nimmt dieses Fluid auf und reduziert dadurch die sich sonst ergebende Druckstöße. Er wirkt also im Hinblick auf die sich ergebenden Druckimpulse dämpfend. Dabei ist für den Ringraum 74 kein Hinterschnitt im Ventilgehäuse 34 notwendig, sondern dieser ist allein durch eine stufenweise Vertiefung im Ventilgehäuse 34 in Zusammenwirkung mit dem angrenzenden Teil 62 des Kolbens 16 geschaffen, was fertigungstechnisch besonders günstig ist.

## Patentansprüche

1. Kolbenpumpe (10) mit einem Kolben (16), einem den Kolben (16) radial gegen einen Zylinder (14) abdichtenden Dichtelement (32; 48) und einem am Kolben (16) angeordneten Einlassventil (18), das mit einem einen Schließkörper (38) halternden Ventilkäfig (34; 50) gestaltet ist, bei der das Dichtelement (48) und der Ventilkäfig (50) einstückig gestaltet sind und an dem Dichtelement (48) eine Federauflage (46) für eine den Kolben (16) gegenüber dem Zylinder (14) abstützende Rückstellfeder (28) ausgebildet ist,
wobei das Dichtelement (48) eine gegen den Zylinder (14) anliegende Dichtlippe (58) aufweist, **dadurch gekennzeichnet, dass** die Dichtlippe relativ zur Federauflage (46) an der von der Rückstellfeder (28) abgewandten Seite axial zurückgesetzt endet.

2. Kolbenpumpe nach Anspruch 1,
**dadurch gekennzeichnet, dass** das Dichtelement (48) und der Ventilkäfig (50) aus Kunststoff hergestellt sind.

3. Kolbenpumpe nach Anspruch 1 oder 2,
**dadurch gekennzeichnet, dass** das Dichtelement (48) mit einer Axialnut (52) gestaltet ist, welche zum Hochdruckbereich (24) der Kolben-Zylinder-Anordnung (16, 14) offen ist.

4. Kolbenpumpe nach einem der Ansprüche 1 bis 3,
**dadurch gekennzeichnet, dass** das Dichtelement (48) an seiner dem Kolben (16) zugewandten Seite gestuft (66) gestaltet ist.

5. Kolbenpumpe nach einem der Ansprüche 1 bis 4,
**dadurch gekennzeichnet, dass** das Dichtelement (48) den Kolben (16) umgreifend gestaltet (70, 72) ist.

6. Kolbenpumpe nach einem der Ansprüche 1 bis 5,
**dadurch gekennzeichnet, dass** der Kolben (16) zweiteilig mit einem ersten, zu einem Antrieb gewandten Teil (60) und einem zweiten, zum Dichtelement (48) gewandten Teil (66) gestaltet ist.

7. Kolbenpumpe nach Anspruch 6,
**dadurch gekennzeichnet, dass** das erste Teil (60) als Vollzylinder und das zweite Teil (62) als Hohlzylinder gestaltet ist.

8. Fahrzeugbremsanlage mit einer Kolbenpumpe (10) nach einem der vorhergehenden Ansprüche.

## Claims

1. Piston pump (10) comprising a piston (16), a sealing element (32; 48) sealing the piston (16) radially with respect to a cylinder (14), and an inlet valve (18) arranged on the piston (16), said inlet valve being designed with a valve cage (34; 50) holding a closing member (38), in which the sealing element (48) and the valve cage (50) are designed in one piece and a spring support (46) for a return spring (28) supporting the piston (16) relative to the cylinder (14) is formed on the sealing element (48), wherein the sealing element (48) has a sealing lip (58) resting against the cylinder (14), **characterized in that** the sealing lip end in an axially set-back manner relative to the spring support (46) on the side facing away from the return spring (28).

2. Piston pump according to Claim 1,
**characterized in that** the sealing element (48) and the valve cage (50) are produced from plastic.

3. Piston pump according to Claim 1 or 2,
**characterized in that** the sealing element (48) is designed with an axial groove (52), which is open towards the high-pressure area (24) of the piston/cylinder arrangement (16, 14).

4. Piston pump according to one of Claims 1 to 3,
**characterized in that** the sealing element (48) is designed in a stepped manner (66) on its side facing the piston (16).

5. Piston pump according to one of Claims 1 to 4,
**characterized in that** the sealing element (48) surrounds (70, 72) the piston (16).

6. Piston pump according to one of Claims 1 to 5,
**characterized in that** the piston (16) is designed in two parts with a first part (60) turned towards a drive and a second part (66) turned towards the sealing element (48).

7. Piston pump according to Claim 6,
**characterized in that** the first part (60) is designed as a solid cylinder and the second part (62) is designed as a hollow cylinder.

8. Vehicle brake system comprising a piston pump (10) according to one of the preceding claims.

## Revendications

1. Pompe à piston (10) dotée d'un piston (16), d'un élément d'étanchéité (32 ; 48) étanchéifiant le piston (16) dans le plan radial contre un cylindre (14) et d'une soupape d'admission (18) disposée au niveau du piston (16) conçue avec une cage de soupape (34 ; 50) soutenant un corps de fermeture (38), l'élément d'étanchéité (48) et la cage de soupape (50) étant réalisés d'un seul tenant et un appui de ressort (46) prévu pour un ressort de rappel (28) soutenant le piston (16) par rapport au cylindre (14) étant réalisé au niveau de l'élément d'étanchéité (48) ;
l'élément d'étanchéité (48) comportant une lèvre étanche (58) reposant contre le cylindre (14) ;
**caractérisée en ce que** la lèvre étanche se termine en recul dans le plan axial par rapport à l'appui de ressort (46) au niveau du côté opposé au ressort de rappel (28).

2. Pompe à piston selon la revendication 1, **caractérisée en ce que** l'élément d'étanchéité (48) et la cage de soupape (50) sont fabriqués en matière plastique.

3. Pompe à piston selon la revendication 1 ou 2, **caractérisée en ce que** l'élément d'étanchéité (48) est pourvu d'une rainure axiale (52) ouverte en direction de la zone de haute pression (24) de l'agencement de piston-cylindre (16, 14).

4. Pompe à piston selon l'une quelconque des revendications 1 à 3, **caractérisée en ce que** l'élément d'étanchéité (48) est agencé de façon étagée (66) au niveau de son côté orienté vers le piston (16).

5. Pompe à piston selon l'une quelconque des revendications 1 à 4, **caractérisée en ce que** l'élément d'étanchéité (48) est conçu de façon à engrener (70, 72) le piston (16).

6. Pompe à piston selon l'une quelconque des revendications 1 à 5, **caractérisée en ce que** le piston (16) est agencé en deux parties avec une première partie (60) orientée vers un entraînement et une deuxième partie (66) orientée vers l'élément d'étanchéité (48).

7. Pompe à piston selon la revendication 6, **caractérisée en ce que** la première partie (60) prend la forme d'un cylindre plein et que la deuxième partie (62) prend la forme d'un cylindre creux.

8. Installation de frein de véhicule doté d'une pompe à piston (10) selon l'une quelconque des revendications précédentes.
